# EUROPÄISCHE PATENTSCHRIFT

(11) **EP 2 689 160 B1**
(45) Veröffentlichungstag und Bekanntmachung des Hinweises auf die Patenterteilung: **06.01.2016**
(21) Anmeldenummer: 12713008.6
(22) Anmeldetag: 23.03.2012
(51) Int. Cl.: F16F 13/10

(54) **HYDRAULISCH DÄMPFENDES LAGER**
HYDRAULICALLY DAMPING BEARING
PALIER À AMORTISSEMENT HYDRAULIQUE

(30) Priorität: 25.03.2011 DE 102011006156
(43) Veröffentlichungstag der Anmeldung: 29.01.2014
(73) Patentinhaber: TrelleborgVibracoustic GmbH, 64293 Darmstadt (DE)
(72) Erfinder: WALDECKER, Ralf, 56564 Neuwied (DE)
(74) Vertreter: Flügel Preissner Kastel Schober
(86) Internationale Anmeldenummer: PCT/EP2012/055253
(87) Internationale Veröffentlichungsnummer: WO 2012/130772

(56) Entgegenhaltungen:
- WO-A1-2010/050521
- DE-A1- 3 701 264

## Beschreibung

Die vorliegende Erfindung betrifft ein hydraulisch dämpfendes Lager, insbesondere zur Lagerung eines Kraftfahrzeugmotors, mit einem Lagergehäuse, einer Tragfeder aus einem elastomeren Material zur Abstützung eines Lagerkerns, einer Arbeitskammer, die von der Tragfeder begrenzt ist, einer Ausgleichskammer, die durch eine Zwischenplatte von der Arbeitskammer getrennt ist und durch eine Ausgleichsmembran aus elastomeren Material begrenzt ist, wobei die Arbeitskammer und die Ausgleichskammer über einen in die Zwischenplatte eingebrachten Überströmkanal miteinander verbunden und mit hydraulischer Flüssigkeit gefüllt sind, wobei in der Zwischenplatte ein radial nach außen führender Befüllungskanal eingebracht ist, der mit dem Überströmkanal verbunden ist und wobei das Lagergehäuse im Bereich des Befüllungskanals eine Öffnung aufweist.

Derartige Lager werden insbesondere zur Abstützung eines Kraftfahrzeugmotors verwendet, um einerseits die von Fahrbahnunebenheiten hervorgerufenen Schwingungen zu dämpfen und andererseits akustische Schwingungen zu isolieren. Die von den Fahrbahnunebenheiten hervorgerufenen Schwingungen werden durch ein hydraulisches System gedämpft, wobei das hydraulische System durch die flüssigkeitsgefüllte Arbeitskammer, die Ausgleichskammer und den die beiden Kammern miteinander verbindenden Überströmkanal gebildet wird. Die Funktionsweise des hydraulischen Systems kann wie folgt beschrieben werden. Die Arbeitskammer wird durch eine Bewegung der Tragfeder vergrößert oder verkleinert, wobei die in der Arbeitskammer befindliche Flüssigkeit über den Überströmkanal in die Ausgleichskammer gedrückt wird. Die im Überströmkanal schwingende Flüssigkeitssäule bewirkt eine Dämpfung.

Die Befüllung der Kammern mit einem Füllmedium erfolgt üblicherweise entweder über den Kern oder über einen in der Zwischenplatte eingebrachten Befüllungskanal. Zur Befüllung des Lagers über den Befüllungskanal wird das Lager mittels einer Befüllvorrichtung evakuiert und anschließend befüllt, wobei das Füllmedium über den Befüllungskanal in den Überströmkanal und von dort aus in die beiden Kammern fließt. Zur Abdichtung wird in den Befüllungskanal ein Verschlusskörper, wie beispielsweise eine Stahl- oder Elastomerkugel, eingepresst. Nachteilig bei der Befüllung über den Befüllungskanal ist, dass sich beim Entfernen der Befüllvorrichtung Tropfen im radial äußeren Bereich des Befüllungskanals, der von dem Verschlusskörper nicht mehr erfasst wird, ansammeln können. Diese Flüssigkeit kann im Betrieb aus dem Befüllungskanal austreten und die umgebenden Teile benetzen und durch Kapillarwirkung zwischen die umgebenden Teile gelangen. Während der Nutzungsdauer des Lagers kann diese Flüssigkeit dann austreten und führt häufig zu Reklamationen seitens der Kunden, obwohl keine Funktionsbeeinträchtigung vorliegt.

Aus der DE 37 01 264 A1 geht ein Hydrolager der eingangs genannten Art hervor, bei dem zur Befüllung der beiden Kammern in der Düsenplatte ein Befüllungskanal eingebracht ist. Der Befüllungskanal wird mittels eines Verschlusskörpers, der von außen eingesetzt wird, verschlossen.

In der DE 60 2005 001 880 T2 ist ein Hydrolager offenbart, das eine elastomere Tragfeder aufweist, die eine Arbeitskammer begrenzt und sich an einer Zwischenplatte abstützt. Die Zwischenplatte ist mit Durchgängen versehen, die in eine Ausgleichskammer führen. Die Ausgleichskammer ist von einer in einer topfförmigen Bodenabdeckung aufgenommenen Ausgleichsmembran begrenzt. Beide Kammern sind mit einem viskosen Fluid befüllt. Zur Befüllung der Kammern ist an der Zwischenplatte ein Ventil radial angeordnet, das mit einem der Kanäle verbunden ist. Das Ventil sorgt für einen sicheren Verschluss des Durchgangs. Nachteilig hierbei ist, dass ein Ventil zum Verschließen des Befüllungskanals im Vergleich zu einem Verschlusskörper teuer ist, so dass ein derartiges Lager in der Herstellung teuer ist.

Aus der JP 2009-275748 A geht ein Hydrolager hervor, das eine einen Lagerkern abstützende elastomere Tragfeder aufweist, die eine Arbeitskammer begrenzt. Die Tragfeder stützt sich an einer Zwischenplatte ab, die einen Überströmkanal aufweist und in eine Ausgleichskammer führt, wobei die Ausgleichskammer von einer Ausgleichsmembran begrenzt ist. Das Lager ist von einer zylindrischen Hülse mit einer auf der Innenseite der Hülse aufgebrachten Elastomerschicht umgeben. In die Hülse ist eine Öffnung und in die Zwischenplatte ein Kanal eingebracht. Über die Öffnung sowie den Kanal erfolgt die Befüllung der beiden Kammern mittels eines Füllmediums. Zum Verschließen der Öffnung und des Kanals wird die Hülse im Bereich des Kanals unterhalb der Öffnung plastisch deformiert. Diese Form des Kanalverschlusses hat den Nachteil, dass sich im Einlassbereich beim Herausziehen der Befüllvorrichtung Tropfen ansammeln können, die während des Betriebs die umliegenden Teile benetzen können.

Der Erfindung liegt daher die Aufgabe zugrunde, ein Lager der eingangs genannten Art derart weiterzubilden, dass ein Benetzen der umliegenden Teile vermieden wird und das gleichzeitig kostengünstig in der Herstellung ist.

Zur Lösung der Aufgabe wird bei einem Lager der eingangs genannten Art vorgeschlagen, dass am Außenumfang der Zwischenplatte ein Trichter mit einem Trichtereinlass und einem Trichterauslass vorgesehen ist und dass der Trichtereinlass die Öffnung im Lagergehäuse umgibt und dichtend an dem Lagergehäuse anliegt. Ferner ist der Trichter federnd ausgebildet.

Das erfindungsgemäße Lager zeichnet sich durch den am Außenumfang der Zwischenplatte angeordneten Trichter aus, der als Auffangvorrichtung für das im Befüllungskanal befindliche Füllmedium dient. Dies verhindert ein durch Kapillareffekt bedingtes Eindringen von Füllmedium zwischen die Bauteile. Demgemäß wird ein Benetzen der umgebenden Teile während des Betriebs verhindert, da der Trichter das überschüssige Füllmedium sammelt und bis zur Entfernung speichert. Ferner zeichnet sich das erfindungsgemäße Lager durch seine kostengünstige Herstellung aus, da aufwändige Maßnahmen und Verfahren zur Beseitigung des in dem Befüllungskanal befindlichen Füllmediums entfallen und somit kürzere Taktzeiten zur Fertigung des Lagers ermöglicht werden.

Der Trichter ist federnd ausgebildet. Infolge der Verformung kann sich der Trichter an das Lagergehäuse anschmiegen. Zudem wird bei einer Deformation des Trichters eine Rückstellkraft erzeugt, sodass der Trichter mit einer ausreichenden Anpresskraft gegen das Lagergehäuse drückt und dichtend an dem Lagergehäuse anliegt. Ferner ermöglicht die federnde Ausbildung des Trichters, dass mögliche toleranzbedingte Abweichungen, Gussformschrägen oder sonstige Abweichungen ausgeglichen werden können.

In einer vorteilhaften Ausgestaltung ist der Trichter stoffschlüssig mit der Zwischenplatte verbunden. Hierdurch wird die Handhabung bei der Montage des erfindungsgemäßen Hydrolagers verbessert, da ein vorheriges Positionieren des Trichters und anschließendes Einsetzen der Zwischenplatte entfällt. Ausserdem ist diese Ausgestaltung kostengünstiger, da keine zusätzliche Form anfällt und der Lagermontageprozess nicht verlängert wird.

Ein Rand des Trichtereinlasses ist vorteilhaft rund oder spitz ausgebildet. Ein rund oder spitz ausgebildeter Rand ermöglicht eine verbesserte Abdichtung. In einer weiteren vorteilhaften Ausgestaltung weist eine Trichterwand des Trichters unterschiedliche Wandstärken auf. Je nach erforderlicher Anpresskraft oder Abdichtwirkung wird die Trichterwand mit einer unterschiedlichen Wandstärke ausgebildet. Beispielsweise werden für größere Anpresskräfte dickere Wandstärken benötigt.

Vorteilhafterweise ist an einer dem Trichter gegenüberliegenden Außenseite der Zwischenplatte wenigstens ein Toleranzausgleichselement angeordnet. Das Toleranzausgleichselement sorgt für einen Ausgleich, falls die Zwischenplatte und/oder das Lagergehäuse unter Normmaß gefertigt worden ist. In einem derartigen Fall drückt das Toleranzausgleichselement die Zwischenplatte in Richtung der Öffnung des Lagergehäuses, sodass der Trichter trotz Maßabweichung der Zwischenplatte und/oder des Lagergehäuses weiterhin dichtend an dem Lagergehäuse anliegt. Das Toleranzausgleichselement ist nachgiebig ausgebildet, sodass dieses für den Fall, dass die Zwischenplatte und das Lagergehäuse Normmaß aufweisen, zusammengedrückt werden kann. Ferner können auch eine Vielzahl an Toleranzausgleichselementen nebeneinander und/oder übereinander an der Zwischenplatte angeordnet sein.

Bei einer vorteilhaften Ausgestaltung ist das Toleranzausgleichselement in Form einer Erhebung ausgebildet. Das Toleranzausgleichselement kann hierbei vorteilhafterweise dreieckig oder rechteckig ausgebildet sein, wobei auch jegliche andere Form der Erhebung denkbar wäre.

In einer weiteren vorteilhaften Ausgestaltung ist das Toleranzausgleichselement als Verdrehsicherung für die Zwischenplatte ausgebildet. Somit kann bei entsprechender Gestaltung das Toleranzausgleichselement in einer zweiten Funktion eine Verdrehsicherheit gewährleisten.

Vorteilhafterweise weist das Lagergehäuse im Bereich der Öffnung einen Rücksprung auf, in dem der Trichter einliegt. Hierdurch wird eine sichere Aufnahme des Trichters in dem Lagergehäuse gewährleistet.

Bei einer weiteren vorteilhaften Ausgestaltung weist die Zwischenplatte im Bereich des Trichters einen Vorsprung auf, wobei der Vorsprung in den Rücksprung des Lagergehäuses eingreift. Hierdurch wird eine Verdrehsicherung geschaffen, sodass die Handhabbarkeit bei der Montage des Lagers verbessert wird.

Vorteilhafterweise ist in dem Befüllungskanal ein Verschlusskörper zum Verschließen des Befüllungskanals einbringbar. Der Verschlusskörper wird in den Befüllungskanal von außen eingepresst. Hierdurch wird ein Austreten des in den Kammern befindlichen Füllmediums vermieden. Der in den Befüllungskanal einzupressende Verschlusskörper kann aus Stahl oder einem Elastomer bestehen und die Form einer Kugel, eines Quaders oder eines anderen Körpers mit rundem, quadratischem oder rechteckigem Querschnitt haben. Auch ein Verschluss durch einen Niet ist denkbar.

Vorteilhafterweise wird der Befüllungskanal durch einen sich verfestigenden Stoff verschlossen. Hierbei handelt es sich um Stoffe, die sich nach Einbringen in den Befüllungskanal verfestigen, wie beispielsweise Silikon oder PU-Schaum (Montageschaum).

In einer vorteilhaften Ausgestaltung ist die Zwischenplatte aus einem faserverstärkten Kunststoff hergestellt. Der faserverstärkte Kunststoff sorgt für eine ausreichende Festigkeit und zugleich für eine Gewichtsreduzierung der Zwischenplatte. Als faserverstärkter Kunststoff kann glasfaserverstärktes Polyamid, PEEK und PPS verwendet werden. Als Fasermaterial kann außer Glas auch Kupfer oder Aramid verwendet werden. Der Glasfaseranteil beträgt vorteilhafterweise zwischen 0 und 50% an dem faserverstärktem Kunststoff. Die Fasern können in Form von Fäden oder Kugeln in dem faserverstärkten Kunststoff vorliegen.

Vorteilhafterweise ist der Trichter aus einem Elastomer hergestellt. Hierdurch gewährleistet der Trichter eine verbesserte Abdichtfunktion. Ferner ermöglicht die Herstellung des Trichters aus einem Elastomer, dass dieser elastische bzw. federnde Eigenschaften aufweist, wie dies zum Anpressen und damit zum Abdichten erforderlich ist. Als Elastomere können Naturkautschuk oder synthetische Elastomere, wie beispielsweise EPDM oder Silikon oder auch TPE verwendet werden.

In einer vorteilhaften Ausgestaltung sind der Trichter und die Zwischenplatte aus dem gleichen Material hergestellt. Hierbei kann der Trichter aus dem gleichen faserverstärkten Kunststoff wie die Zwischenplatte hergestellt sein. Die federnden Eigenschaften werden dann durch Materialeigenschaften und/oder geeignete Formgebung erzeugt.

Nachfolgend wird die Erfindung anhand von Ausführungsbeispielen näher beschrieben, die in den Zeichnungen schematisch dargestellt sind. Hierbei zeigen:
- Fig. 1: einen Vertikalschnitt durch das erfindungsgemäße Lager;
- Fig. 2: eine perspektivische Ansicht der Zwischenplatte gemäß einer ersten Ausführungsform mit einer ersten Ausführungsform eines Trichters;
- Fig. 3: einen Horizontalschnitt durch das erfindungsgemäße Lager entlang der Linie III-III in Fig. 1;
- Fig. 4: einen schematischen Teilausschnitt des Trichters gemäß der ersten Ausführungsform im eingebauten bzw. nicht eingebauten Zustand;
- Fig. 5: einen schematischen Teilausschnitt der Zwischenplatte gemäß einer zweiten Ausführungsform im Bereich des Trichters;
- Fig. 6: einen schematischen Teilausschnitt eines Trichters gemäß einer zweiten Ausführungsform;
- Fig. 7: einen schematischen Teilausschnitt eines Trichters gemäß einer dritten Ausführungsform und
- Fig. 8: einen schematischen Teilausschnitt eines Trichters gemäß einer vierten Ausführungsform.

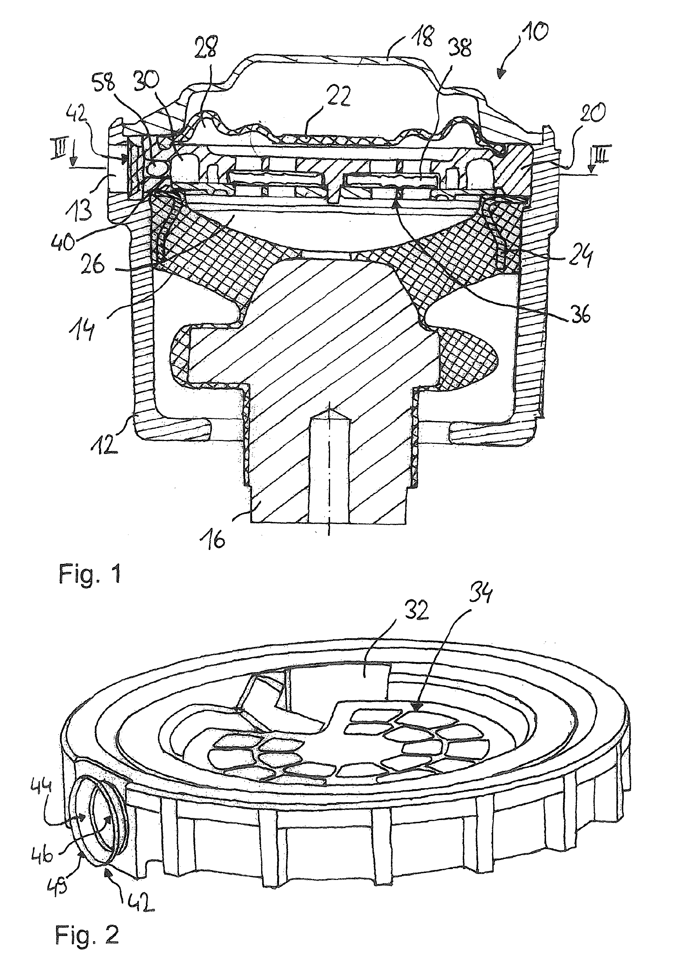

In Fig. 1 ist ein hydraulisch dämpfendes Lager 10 zur Lagerung eines nicht näher dargestellten Kraftfahrzeugmotors gezeigt.

Das Lager 10 weist ein zylinderförmiges Lagergehäuse 12 mit einer Öffnung 13, eine Tragfeder 14 aus einem elastomeren Material zur Abstützung eines Lagerkerns 16, einen Lagergehäusedeckei 18, eine Zwischenplatte 20 und eine Ausgleichsmembran 22 auf. In die Tragfeder 14 ist eine Armierung 24 zur Verstärkung eingebracht. Die Tragfeder 14 und die Zwischenplatte 20 begrenzen eine Arbeitskammer 26. Ferner begrenzen die Zwischenplatte 20 und die Ausgleichsmembran 22 eine Ausgleichskammer 28. Die Arbeitskammer 26 und die Ausgleichkammer 28 sind durch einen in die Zwischenplatte 20 eingebrachten Überströmkanal 30 miteinander verbunden. Sowohl die Arbeitskammer 26 als auch die Ausgleichskammer 28 sind mit einer hydraulischen Flüssigkeit gefüllt.

Fig. 2 zeigt eine perspektivische Ansicht der Zwischenplatte 20. An einer Oberseite der Zwischenplatte 20 ist eine Überströmkanalöffnung 32 eingebracht, die einen Einlass und/oder Auslass der hydraulischen Flüssigkeit in den Überströmkanal 30 und damit in die Ausgleichskammer 28 darstellt. An einer der Arbeitskammer 28 zugewandten Unterseite der Zwischenplatte 20 ist eine nicht dargestellte zweite Überströmkanalöffnung eingebracht, sodass die beiden Kammern 26, 28 miteinander verbunden sind. Ferner ist an der Oberseite ein oberes Gitter 34 eingebracht. Wie aus Fig. 1 ersichtlich ist, weist die Zwischenplatte 20 an einer der Arbeitskammer 28 zugewandten Unterseite ein unteres Gitter 36 auf. Zwischen den beiden Gittern 34, 36 ist eine elastische Entkopplungsmembran 38 eingebracht. Des Weiteren weist die Zwischenplatte 20 einen von dem Überströmkanal 30 radial nach außen führenden Befüllungskanal 40 auf. Der Befüllungskanal 40 ist von einem Trichter 42 umgeben. Der Trichter 42 ist stoffschlüssig mit der Zwischenplatte 20 verbunden.

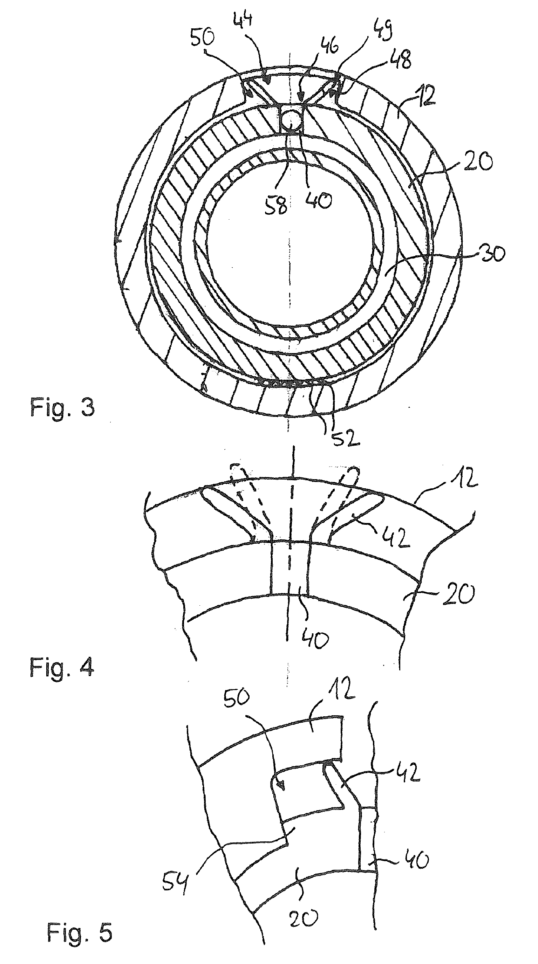

Wie in Fig. 3 dargestellt ist, weist der Trichter 42 einen Trichtereinlass 44, einen Trichterauslass 46 und eine Trichterwand 48 auf. Hierbei umgibt der Trichterauslass 46 den Befüllungskanal 40, wobei der Trichter 42 stoffschlüssig über seinen Trichterauslass 46 mit der Zwischenplatte 20 verbunden ist. Die Trichterwand 48 ist elastisch und federnd ausgebildet. Ein den Trichtereinlass 44 umlaufender Rand 49 der Trichterwand 48 ist rund ausgebildet. Ferner kann der umlaufende Rand 49 auch spitz gestaltet sein. Der Trichter 42 ist aus einem weichen elastischen Material, wie beispielsweise Gummi oder Elastomer, hergestellt.

Der Trichter 42 liegt in einem in dem Lagergehäuse 12 ausgebildeten Rücksprung 50 im Bereich der Öffnung 13 des Lagergehäuses 12 ein. Hierbei drückt der umlaufende Rand 49 abdichtend gegen das Lagergehäuse 12, wobei der Trichtereinlass 44 die Öffnung 13 des Lagergehäuses 12 umgibt.

Zum Ausgleich etwaiger Maßabweichungen der Zwischenplatte 20 und/oder des Lagergehäuses 12 weist die Zwischenplatte 20 an ihrem Außenumfang auf einer dem Trichter 42 gegenüber liegenden Seite Toleranzausgleichselemente 52 auf. Die Toleranzausgleichselemente 52 sind als dreiecksförmige elastische Erhebungen ausgebildet und sorgen dafür, dass bei Maßabweichungen der Trichter 42, in Richtung des Lagergehäuses 12 gedrückt wird Somit wird selbst bei Maßabweichungen der Zwischenplatte 20 bzw. des Lagergehäuses 12 eine ausreichende Anpresskraft des Trichters 42 gegen das Lagergehäuse 12 und damit einhergehend eine Abdichtung sichergestellt.

In der Fig. 4 ist ein schematischer Teilausschnitt der Zwischenplatte 20 mit dem Trichter 42 im nicht-angedrückten und im angedrückten Zustand gegen das Lagergehäuse 12 dargestellt. Der strichlinierte Trichter 42 zeigt den Trichter 42 im nicht-angedrückten Zustand. Da die Trichterwand 48 elastisch ausgebildet ist, federt diese im angedrückten Zustand ein, wie dies in Fig. 4 mit den durchgehenden Strichen gezeigt ist. Aufgrund der elastischen Materialeigenschaften der Trichterwand 48 wird somit eine Gegenkraft erzeugt, die gegen das Lagergehäuse 12 drückt. Hierdurch wird eine Abdichtung gewährleistet.

Bei einer in Fig. 5 dargestellten zweiten Ausführungsform der Zwischenplatte 20, weist die Zwischenplatte 20 im Bereich des Trichters 42 einen Vorsprung 54 auf. Der Vorsprung 54 greift in den Rücksprung 50 des Lagergehäuses 12 ein und bildet so eine Verdrehsicherung.

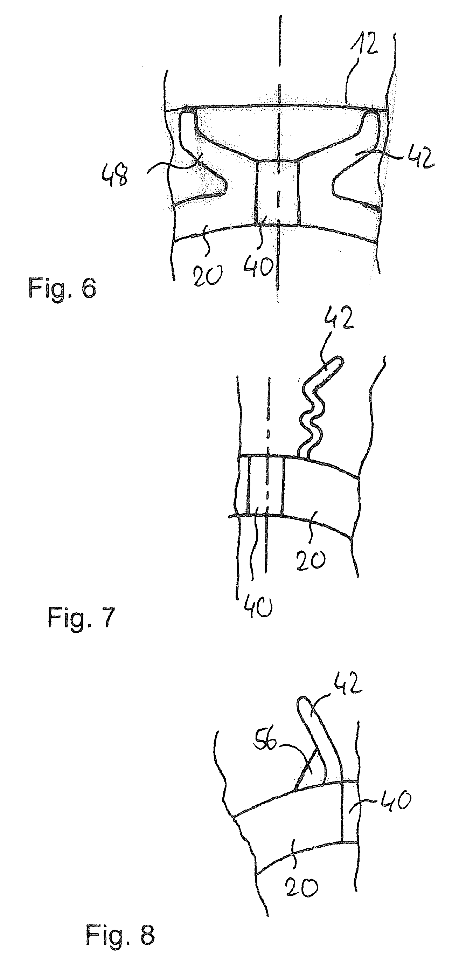

In Fig. 6 ist eine zweite Ausführungsform für den Trichter 42 dargestellt. Hierbei ist der Trichter 42 näherungsweise Y-förmig ausgebildet, wobei die Trichterwand 48 unterschiedliche Wandstärken aufweist. Ein derart ausgebildeter Trichter 42 ist dann von Vorteil, wenn eine höhere Anpresskraft zum Anpressen und Abdichten notwendig ist.

Eine dritte Ausführungsform des Trichters 42 ist in Fig. 7 dargestellt. Hierbei weist die Trichterwand 48 näherungsweise eine federförmige Ausgestaltung auf.

Fig. 8 zeigt eine vierte Ausführungsform des Trichters 42. Gemäß der vierten Ausführungsform des Trichters 42 ist an der Trichterwand 48 eine Versteifungsrippe 56 zur Versteifung der Trichterwand 48 angeordnet. Es ist auch möglich, eine Vielzahl an Versteifungsrippen 56, die umlaufend an der Trichterwand 48 angeordnet sind, anzubringen. Ferner ist es möglich, lediglich eine umlaufende Versteifungsrippe 56 an den Trichterwand 48 anzubringen. Des Weiteren lassen sich die ersten drei Ausführungsformen des Trichters 42 auch mit einer oder mehreren oder einer umlaufenden Versteifungsrippe 56 versehen.

Im Nachfolgenden wird die Befüllung des Lagers 10 über den Befüllungskanal 40 beschrieben. Zur Befüllung wird ein Befüllstutzen einer nicht näher dargestellten Befüllvorrichtung durch die Öffnung 13 des Lagergehäuses 12 in den Befüllungskanal 40 eingebracht. Anschließend erfolgt die Befüllung der Arbeitskammer 26 und der Ausgleichskammer 28 mit hydraulischer Flüssigkeit. Hierbei strömt die hydraulische Flüssigkeit von dem Befüllungskanal 40 in den Überströmkanal 30 und schließlich über die Überströmkanalöffnungen 32 in die Arbeitskammer 26 und Ausgleichkammer 28. Nach dem Befüllen wird der Befüllstutzen entfernt und der Befüllungskanal 40 wird mit einem Verschlusskörper 58 verschlossen, wie dies in den Fig. 1 und 3 dargestellt ist. Hierzu wird der Verschlusskörper 58 von außen in den Befüllungskanal 40 eingepresst, sodass der Befüllungskanal 40 dicht verschlossen ist. Der Verschlusskörper 48 ist im vorliegenden Ausführungsbeispiel als Stahl- oder Elastomerkugel ausgebildet.

Beim Herausziehen des Befüllstutzens können sich Tropfen im radial äußeren Bereich des Befüllungskanals 40 ansammeln, die nicht von dem Verschlusskörper 58 erfasst werden. Diese Tropfen werden jedoch während des Betriebs von dem Trichter 42, der als Reservoir für diese Tropfen dient, aufgefangen, sodass diese nicht über die Öffnung 13 aus dem Lager 10 austreten können und die umliegenden Teile benetzt werden.

Das erfindungsgemäße Lager 10 zeichnet sich dadurch aus, dass am Außenumfang der Zwischenplatte 20 ein Trichter 42 angeordnet ist, der den Befüllungskanal 40 umgibt und dichtend an dem Lagergehäuse 12 im Bereich der Öffnung 13 anliegt. Der Trichter 42 dient als Reservoir für Flüssigkeit, die sich im radial außen liegenden Bereich des Befüllungskanals 40 befindet. Damit wird ein Austreten der Flüssigkeit während des Betriebs und damit einhergehend ein Benetzen der umgebenden Teile verhindert. Das Lager 10 zeichnet sich durch seine kostengünstige Herstellung aus, da aufwändige Maßnahmen zur Entfernung des Füllmediums vermieden und somit kürzere Taktzeiten ermöglicht werden.

### Bezugszeichenliste

- 10: Hydrolager
- 12: Lagergehäuse
- 13: Öffnung
- 14: Tragfeder
- 16: Lagerkern
- 18: Lagergehäusedeckel
- 20: Zwischenplatte
- 22: Ausgleichsmembran
- 24: Armierung
- 26: Arbeitskammer
- 28: Ausgleichskammer
- 30: Überströmkanal
- 32: Überströmkanalöffnung
- 34: oberes Gitter
- 36: unteres Gitter
- 38: Entkopplungsmembran
- 40: Befüllungskanal
- 42: Trichter
- 44: Trichtereinlass
- 46: Trichterauslass
- 48: Trichterwand
- 49: umlaufende Rand
- 50: Rücksprung
- 52: Toleranzausgleichselemente
- 54: Vorsprung
- 56: Versteifungsrippe
- 58: Verschlusskörper

## Patentansprüche

1. Hydraulisch dämpfendes Lager (10), insbesondere zur Lagerung eines Kraftfahrzeugmotors, mit einem Lagergehäuse (12), einer Tragfeder (14) aus einem elastomeren Material zur Abstützung eines Lagerkerns (16), einer Arbeitskammer (26), die von der Tragfeder (14) begrenzt ist, einer Ausgleichskammer (28), die durch eine Zwischenplatte (20) von der Arbeitskammer (26) getrennt ist und durch eine Ausgleichsmembran (22) aus elastomeren Material begrenzt ist, wobei die Arbeitskammer (26) und die Ausgleichskammer (28) über einen in die Zwischenplatte (20) eingebrachten Überströmkanal (30) miteinander verbunden und mit hydraulischer Flüssigkeit gefüllt sind, wobei in der Zwischenplatte (20) ein radial nach außen führender Befüllungskanal (40) eingebracht ist, der mit dem Überströmkanal (30) verbunden ist, und wobei das Lagergehäuse (12) im Bereich des Befüllungskanals (40) eine Öffnung (13) aufweistwobei am Außenumfang der Zwischenplatte (20) ein Trichter (42) mit einem Trichtereinlass (44) und einem Trichterauslass (46) vorgesehen ist und dass der Trichtereinlass (44) die Öffnung (13) im Lagergehäuse (12) umgibt und dichtend an dem Lagergehäuse (12) anliegt, **dadurch gekennzeichnet, dass** der Trichter (42) federnd ausgebildet ist.

2. Lager nach Anspruch 1, **dadurch gekennzeichnet, dass** der Trichter (42) stoffschlüssig mit der Zwischenplatte (20) verbunden ist.

3. Lager nach einem der vorhergehenden Ansprüche, **dadurch gekennzeichnet, dass** ein Rand (49) des Trichtereinlasses (44) rund oder spitz ausgebildet ist.

4. Lager nach einem der vorhergehenden Ansprüche, **dadurch gekennzeichnet, dass** eine Trichterwand (48) des Trichters (42) unterschiedliche Wandstärken aufweist.

5. Lager nach einem der vorhergehenden Ansprüche, **dadurch gekennzeichnet, dass** an einer dem Trichter (42) gegenüberliegenden Außenseite der Zwischenplatte (20) wenigstens ein Toleranzausgleichselement (52) angeordnet ist.

6. Lager nach Anspruch 5, **dadurch gekennzeichnet, dass** das Toleranzausgleichselemente (52) in Form einer Erhebung ausgebildet ist.

7. Lager nach Anspruch 5 oder 6, **dadurch gekennzeichnet, dass** das Toleranzausgleichselement (52) als Verdrehsicherung für die Zwischenplatte (20) ausgebildet ist.

8. Lager nach einem der vorhergehenden Ansprüche, **dadurch gekennzeichnet, dass** das Lagergehäuse (12) im Bereich der Öffnung (13) einen Rücksprung (50) aufweist, in dem der Trichter (42) eingreift.

9. Lager nach Anspruch 7, **dadurch gekennzeichnet, dass** die Zwischenplatte (20) im Bereich des Trichters (42) einen Vorsprung (54) aufweist, wobei der Vorsprung (54) in den Rücksprung (50) des Lagergehäuses (12) eingreift.

10. Lager nach einem der vorhergehenden Ansprüche, **dadurch gekennzeichnet, dass** in dem Befüllungskanal (40) ein Verschlusskörper (58) zum Verschließen des Befüllungskanals (40) einbringbar ist.

11. Lager nach einem der Ansprüche 1 bis 9, **dadurch gekennzeichnet, dass** der Befüllungskanal (40) durch einen sich verfestigenden Stoff verschlossen wird.

12. Lager nach einem der vorhergehenden Ansprüche, **dadurch gekennzeichnet, dass** die Zwischenplatte (20) aus einem faserverstärktem Kunststoff hergestellt ist.

13. Lager nach einem der vorhergehenden Ansprüche, **dadurch gekennzeichnet, dass** der Trichter (42) aus einem Elastomer hergestellt ist.

14. Lager nach einem der vorhergehenden Ansprüche, **dadurch gekennzeichnet, dass** der Trichter (42) und die Zwischenplatte (20) aus dem gleichen Material hergestellt sind.

## Claims

1. Hydraulically damped mount (10), in particular for mounting an engine of a motor vehicle, having a mount housing (12), a supporting element (14) made from an elastomeric material for mounting a mount core (16), a working chamber (26) that is confined by the supporting element (14), a damping chamber (28) that is separated from the working chamber (26) by an intermediate plate (20) and is confined by a compensation diaphragm (22) made from an elastomeric material, wherein the working chamber (26) and the damping chamber (28) are connected by an overflow channel (30) provided in the intermediate plate (20) and are filled with an hydraulic fluid, wherein a filling channel (40) leading radially outwards is provided in the intermediate plate (20), the filling channel (40) being connected to the overflow channel (30), and wherein the mount housing (12) comprises an opening (30) in the vicinity of the filing channel (40), wherein a funnel (42) having a funnel inlet (44) and a funnel outlet (46) is provided at the circumference of the intermediate plate (20) and the funnel inlet (24) surrounds the opening (13) in the mount housing (12) and sealingly abuts against the mount housing (12), **characterized in that** the funnel (42) is formed resilient.

2. Mount according to claim 1 **characterized in that** the funnel (42) is firmly bonded to the intermediate plate (20).

3. Mount according to one of the preceding claims **characterized in that** an edge (49) of the funnel inlet (44) is formed round or sharp.

4. Mount according to one of the preceding claims **characterized in that** a funnel wall (48) of the funnel (42) has different wall thicknesses.

5. Mount according to one of the preceding claims **characterized in that** at least one tolerance compensation element (52) is arranged at the circumference of the intermediate plate (20) opposite of the funnel (42).

6. Mount according to claim 5 **characterized in that** the tolerance compensation elements (52) is formed as an elevation.

7. Mount according to claim 5 or 6 **characterized in that** the tolerance compensation element (52) is formed as an anti-rotation device for the intermediate plate (20).

8. Mount according to one of the preceding claims **characterized in that** the mount housing (12) includes a recession in the vicinity of the opening (13) with which the funnel (42) engages.

9. Mount according to claim 7 **characterized in that** the intermediate plate (20) comprises a projection (54) in the vicinity of the funnel (42) wherein the projection (54) engages with the recession (50) of the mount housing (12).

10. Mount according to one of the preceding claims **characterized in that** a closing body (58) for closing the filing channel (40) is insertable to the filling channel (40).

11. Mount according to one of the claims 1 to 9 **characterized in that** the filling channel (40) can be closed by a solidifying material.

12. Mount according to one of the preceding claims **characterized in that** the intermediate plate (20) is made of a fibre-reinforced plastic.

13. Mount according to one of the preceding claims **characterized in that** the funnel (42) is made from an elastomer.

14. Mount according to one of the preceding claims **characterized in that** the funnel (42) and the intermediate plate (40) are made of the same material.

## Revendications

1. Support à amortissement hydraulique (10), en particulier pour le montage d'un moteur de véhicule automobile, comprenant un boîtier de support (12), un ressort porteur (14) en un matériau élastomère pour soutenir un coeur de support (16), une chambre de travail (26), qui est limitée par le ressort porteur (14), une chambre de compensation (28), qui est séparée vis-à-vis de la chambre de travail (26) par une plaque intermédiaire (20) et qui est délimitée par une membrane de compensation (22) en matériau élastomère, dans lequel la chambre de travail (26) et la chambre de compensation (28) sont reliées l'une à l'autre via un canal de déversement (30) ménagé dans la plaque intermédiaire (20) et sont remplis avec un liquide hydraulique, dans lequel un canal de remplissage (40) menant radialement vers l'extérieur est ménagé dans la plaque intermédiaire (20) et est relié avec le canal de déversement (30), et dans lequel le boîtier de support (12) comporte une ouverture (13) dans la région du canal de remplissage (40), et un entonnoir (42) présentant une entrée (44) et une sortie (46) est prévu à la périphérie extérieure de la plaque intermédiaire (20), et de sorte que l'entrée (44) de l'entonnoir entoure l'ouverture (13) dans le boîtier de support (12) et s'applique de manière étanche sur le boîtier de support,
**caractérisé en ce que** l'entonnoir (42) est réalisé avec effet élastique.

2. Support selon la revendication 1, **caractérisé en ce que** l'entonnoir (42) est relié en coopération de matières avec la plaque intermédiaire (20).

3. Support selon l'une des revendications précédentes, **caractérisé en ce qu'**une bordure (49) de l'entrée (44) de l'entonnoir est réalisé arrondie ou en pointe.

4. Support selon l'une des revendications précédentes, **caractérisé en ce qu'**une paroi (48) de l'entonnoir (42) présente des épaisseurs de paroi différentes.

5. Support selon l'une des revendications précédentes, **caractérisé en ce qu'**au moins un élément de compensation de tolérances (52) est agencé sur une face extérieure, opposée à l'entonnoir (42), de la plaque intermédiaire (20).

6. Support selon la revendication 5, **caractérisé en ce que** l'élément de compensation de tolérances (52) est réalisé sous la forme d'une bosse.

7. Support selon la revendication 5 ou 6, **caractérisé en ce que** l'élément de compensation de tolérances (52) est réalisé à titre de dispositif antirotation pour la plaque intermédiaire (20).

8. Support selon l'une des revendications précédentes, **caractérisé en ce que** le boîtier de support (12) comporte, dans la région de l'ouverture (13), un ressaut (50) dans lequel s'engage l'entonnoir (42).

9. Support selon la revendication 7, **caractérisé en ce que**, dans la région de l'entonnoir (42), la plaque intermédiaire comporte une saillie (54) et la saillie (54) s'engage dans le ressaut (50) du boîtier de support (12).

10. Support selon l'une des revendications précédentes, **caractérisé en ce qu'**un corps d'obturation (58) pour obturer le canal de remplissage (40) est susceptible d'être introduit dans le canal de remplissage (40).

11. Support selon l'une des revendications 1 à 9, **caractérisé en ce que** le canal de remplissage (40) est obturé par un produit qui se solidifie.

12. Support selon l'une des revendications précédentes, **caractérisé en ce que** la plaque intermédiaire (20) est fabriquée en une matière plastique renforcée par des fibres.

13. Support selon l'une des revendications précédentes, **caractérisé en ce que** l'entonnoir (42) est fabriqué en élastomère.

14. Support selon l'une des revendications précédentes, **caractérisé en ce que** l'entonnoir (42) et la plaque intermédiaire (20) sont fabriqués du même matériau.
